# EUROPÄISCHE PATENTANMELDUNG

(11) **EP 0 823 350 A2**
(43) Veröffentlichungstag der Anmeldung: **11.02.1998**
(21) Anmeldenummer: 97111885.6
(22) Anmeldetag: 12.07.1997
(51) Int. Cl.: B60N 2/48

(54) **Fahrzeugsitz mit einer Kopfstütze**

(30) Priorität: 07.08.1996 DE 19631843
(71) Anmelder: Bayerische Motoren Werke Aktiengesellschaft, 80788 München (DE)
(72) Erfinder: Jovanovic, Nenad, 86163 Augsburg (DE)

(57) **Zusammenfassung**

Ein in Fahrzeuglängsrichtung verlagerbarer Fahrzeugsitz (1) ist mit einer Kopfstütze (4) versehen, die beim Vorwärtsverlagern (Pfeilrichtung a') des Fahrzeugsitzes (1) in eine abgesenkte Lage (d'), beim Rückwärtsverlagern (Pfeilrichtung a'') des Fahrzeugsitzes (1) dagegen in eine hochgestellte Lage (c') verlagert wird.

Ferner kann die Kopfstütze (4) unabhängig von der zwangsgeführten Höhenverlagerung durch eine manuell betätigbare Höhenverstelleinrichtung (5) verlagert werden. Die Höhenverstelleinrichtung (5) besteht aus einem an der Rückenlehne (3) angebrachten Aufnahmeteil (7), einem Führungsteil (9) und einem Gleitteil (8), die am Aufnahmeteil (7) höhenverschiebbar sind. Dabei hat das Aufnahmeteil (7) und das Gleitteil (8) jeweils eine Rastverzahnung (10), mit denen jeweils eine am Führungsteil (9) schwenkbar gelagerte Rastklinke (12 und 13) zusammenwirkt. Bei Betätigung eines zweiten Bowdenzugs (20) werden die Rastklinken (12 und 13) in bezug auf die Rastverzahnung (10) des Aufnahmeteils (7) und Gleitteils (8) außer Eingriff gebracht, so daß die am Gleitteil (8) angebrachte Kopfstütze (4) manuell in eine beliebige Höhenlage verstellt werden kann.

## Beschreibung

Die Erfindung bezieht sich auf einen Fahrzeugsitz mit einer Kopfstütze der im Oberbegriff des Patentanspruchs 1 genannten und aus der DE 28 10 577 A1 hervorgehenden Art.

Der in dieser Druckschrift offenbarte Fahrzeugsitz weist mehrere, verschiedenartig ausgebildete Verstelleinrichtungen auf, über die die Kopfstütze bei Längsverschiebungen des Fahrzeugsitzes zwangsweise höhenverlagert wird. Dabei hat eine der Verstelleinrichtungen einen Bowdenzug, der an einem Endabschnitt an der Rückenlehne mit der Höhenverstelleinrichtung der Kopfstütze in Verbindung steht und mit seinem gegenüberliegen Endabschnitt am vorderen Randbereich des Sitzteils festgelegt ist. Hierdurch wird die Kopfstütze bei Längsverschiebungen des Fahrzeugsitzes zwangsweise nach oben und nach unten verlagert. Bei anderen Ausführungsarten wird die Höhenverstelleinrichtung durch Seilzüge, ein antreibbares Zahnritzel mit kämmender Zahnstange und durch hydraulische Mittel betätigt. Nachdem jedoch die Kopfstütze stets zwangsweise höhenverlagert wird, kann sie nicht bedarfsweise individuell eingestellt werden.

Aufgabe der Erfindung ist es daher, bei einem Fahrzeugsitz der im Oberbegriff des Patentanspruchs 1 genannten Art die Verstelleinrichtung derart auszubilden, daß die Kopfstütze von Fahrzeuginsassen individuell eingestellt werden kann.

Zur Lösung der Aufgabe sind die im Patentanspruch 1 dargelegten Merkmale vorgesehen.

Durch die erfindungsgemäß vorgesehene Einrichtung kann die Kopfstütze unter Ausschaltung ihrer zwangsgesteuerten Höhenverlagerung vorteilhafterweise durch bloße manuelle Betätigung höhenverlagert und damit rasch und in einfacher Weise an unterschiedliche Höhenlagen des Kopfes eines Fahrzeuginsassen angepaßt werden. Dabei ist die Höhenverlagerung der Kopfstütze vorteilhafterweise auch vom Fahrzeugsitz aus durchführbar. Durch die individuell einstellbare Höhenlage der Kopfstütze wird auch die passive Sicherheit des Fahrzeuginsassen erhöht.

Zweckmäßigerweise besteht die Einrichtung zum Höhenverlagern der Kopfstütze aus einem rahmenfesten Aufnahmeteil und einem an diesem höhenverschiebbar geführten, die Kopfstütze tragenden Gleitteil sowie einem zwischen den beiden Teilen liegenden Führungsteil. An diesem sind über eine Lagerwelle zwei Arretierelemente angelenkt, die mit dem Aufnahmeteil und mit dem Gleitteil zusammenwirken und die miteinander zum beliebigen Verlagern der Kopfstütze durch Bowdenzüge oder dergleichen betätigt werden. Damit das Aufnahmeteil und das Gleitteil in der jeweiligen Höhenlage schubfest gehalten werden kann, weisen sie an zwei nebeneinander liegenden Längsseiten jeweils eine Rastverzahnung mit gleich großer Zahnteilung auf, in die jeweils eine am Führungsteil angelenkte Rastklinke eingreift, die als Arretierelement dient. Dabei wird das Aufnahmeteil und das Gleitteil durch Federwirkung in Ausgangslage gehalten (Merkmale der Patentansprüche 2 bis 5).

Das Gleitteil wird über zwei seitlich abstehende Gleitelemente längs den gegenüberliegenden, seitlichen Führungsbahnen des Aufnahmeteils höhenverschiebbar geführt. Dabei schließen sich an die Gleitelemente jeweils eine rohrförmige Halterung an, welche zur Aufnahme der Endabschnitte eines U-förmigen Bügels dienen. Dieser trägt seinerseits die Kopfstütze. Schließlich weist das Gleitteil eine mittige, rechteckförmige Ausnehmung auf, in der die zweite Rastklinke angeordnet ist, die zum Abwärtsverlagern des Gleitteils auf dem untenliegenden Rand der Ausnehmung aufliegt (Merkmale der Patentansprüche 6 und 7).

Die Kopfstütze wird beim Vorwärtsverlagern des Fahrzeugsitzes zwangsgeführt nach unten, bei dessen Rückwärtsverlagern dagegen nach oben verlagert. Hierzu dient ein an einem Fortsatz des Führungsteils angebrachtes Drahtseil eines ersten Bowdenzugs, wobei der gegenüberliegende Endabschnitt der Hülle des Bowdenzugs an einer längsverschiebbaren Gleitschiene des Fahrzeugsitzes angebracht ist. Darüber hinaus ist an der Gleitschiene eine dreieckförmige sowie einen Längsschlitz aufweisene Aufnahmeplatte befestigt. An dieser ist ferner auch ein Schwenkhebel angelenkt, der seinerseits an seinem freien Endabschnitt mit einem Längsschlitz versehen ist. Dabei ist dieser und der Längsschlitz der Aufnahmeplatte von einem in den beiden Längsschlitzen längsverschiebbaren Befestigungselement durchsetzt, an dem das Drahtseil des ersten Bowdenzugs befestigt ist. Bei Längsverschiebungen des Fahrzeugsitzes wird der an der Aufnahmeplatte angelenkte Schwenkhebel verschwenkt und dadurch das Drahtseil des ersten Bowdenzugs längsverlagert. Schließlich ist an der fahrzeugaufbaufesten Führungsschiene des Fahrzeugsitzes ein Anschlag angebracht, mit dem das Befestigungselement beim Vorwärtsverlagern des Fahrzeugsitzes derart zusammenwirkt, daß die Kopfstütze nach unten verlagert wird.Beim Rückwärtsverlagern des Fahrzeugsitzes wird dagegen das Gleitteil und damit die Kopfstütze durch Federwirkung nach oben verlagert (Merkmale der Patentansprüche 8 bis 10).

Ein Ausführungsbeispiel der Erfindung ist in der Zeichnung dargestellt und wird im folgenden erläutert. Es zeigt:
- Figur 1: eine Seitenansicht eines Personenkraftwagens mit einem in zwei Positionen dargestellten Fahrzeugsitz mit höhenverlagerbarer Kopfstütze,
- Figur 2: eine perspektivische Darstellung der Rahmenteile des Fahrzeugsitzes, wobei die Rückenlehne die Einrichtung zum Höhenverlagern der Kopfstütze aufweist,
- Figur 3: eine vergrößerte Einzeldarstellung der Höhenverlagerungseinrichtung mit nach unten verlagerter Kopfstütze,
- Figur 4: eine der Figur 3 im wesentlichen entsprechende Darstellung, jedoch mit nach oben verlagerter Kopfstütze,
- Figur 5: einen Schnitt längs der Linie V-V in Figur 3 in größerer Darstellung,
- Figur 6: eine vergrößerte Einzeldarstellung des Gleitteils und des Führungsteils mit einer Rastklinke,
- Figur 7: eine Draufsicht in Pfeilrichtung VII von Figur 2 in größerer Darstellung,
- Figur 8: den Endbereich der Führungsschiene mit Gleitschiene und Aufnahmeplatte in perspektivischer Darstellung.

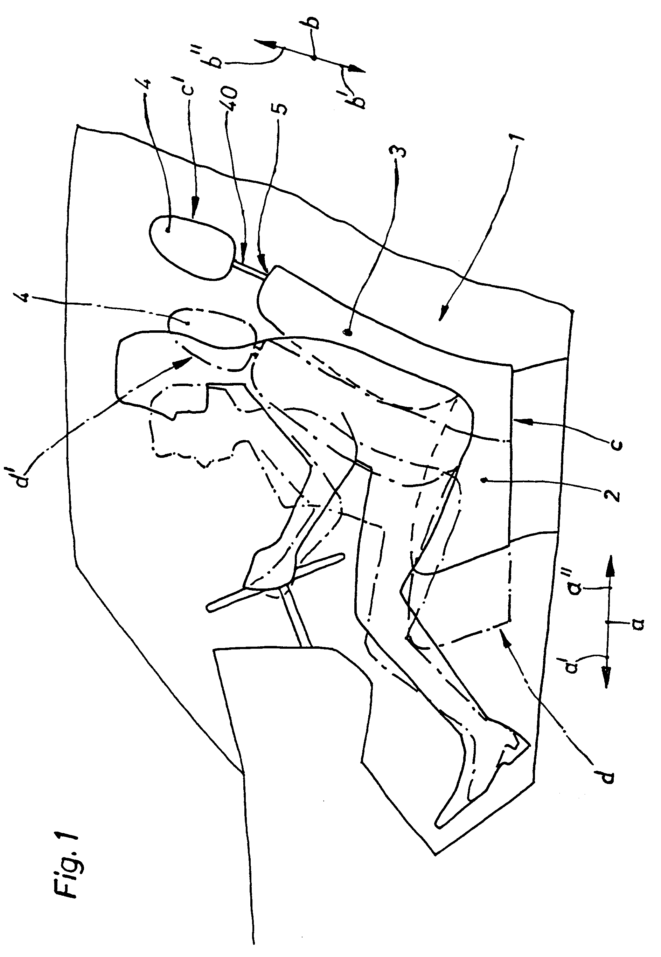

Der in Figur 1 dargestellte Fahrzeugsitz 1 besteht hauptsächlich aus einem Sitzteil 2 und einer an diesem angelenkten Rückenlehne 3. Diese trägt eine Kopfstütze 4, die beim Verlagern des Fahrzeugsitzes 1 in den Richtungen des Doppelpfeils a (mit strichpunktierten Linien dargestellt) über eine Höhenverstelleinrichtung 5 zwangsgeführt und bedarfsweise auch manuell in den Richtungen des Doppelpfeils b höhenverlagerbar ist. Dabei befindet sich bei vorwärts verlagerter Lage d des Fahrzeugsitzes 1 die Kopfstütze 4 in nach unten verlagerter Lage d' (nahe der Oberkante der Rückenlehne 3), während in rückwärtsverlagerter Lage c des Fahrzeugsitzes 1 sich die Kopfstütze 4 in nach oben verlagerter Lage c' befindet, wobei zwischen der Oberkante der Rückenlehne 3 und der Kopfstütze 4 ein größerer Abstand vorhanden ist.

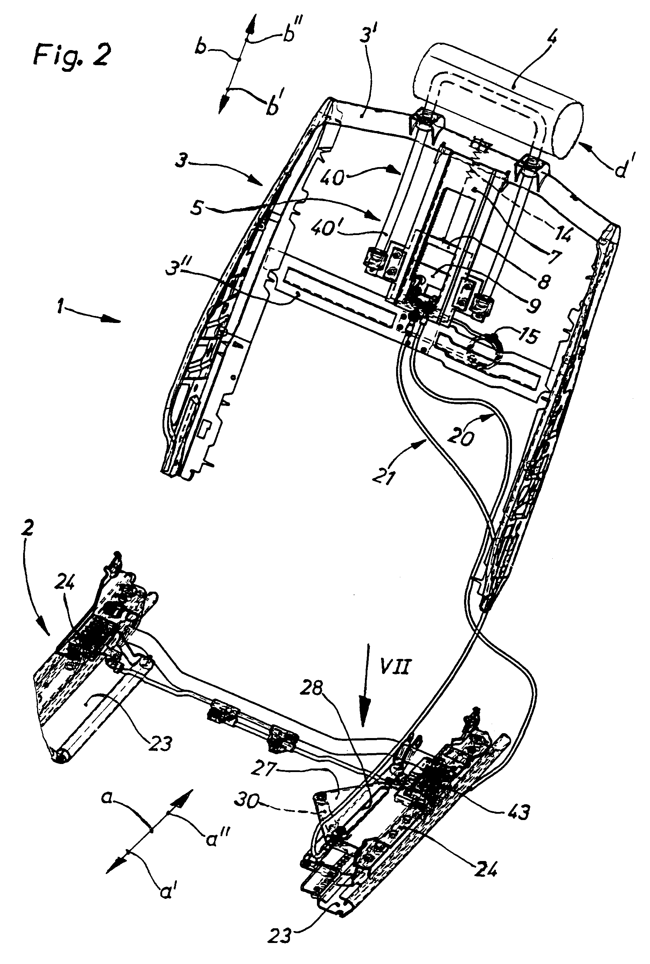

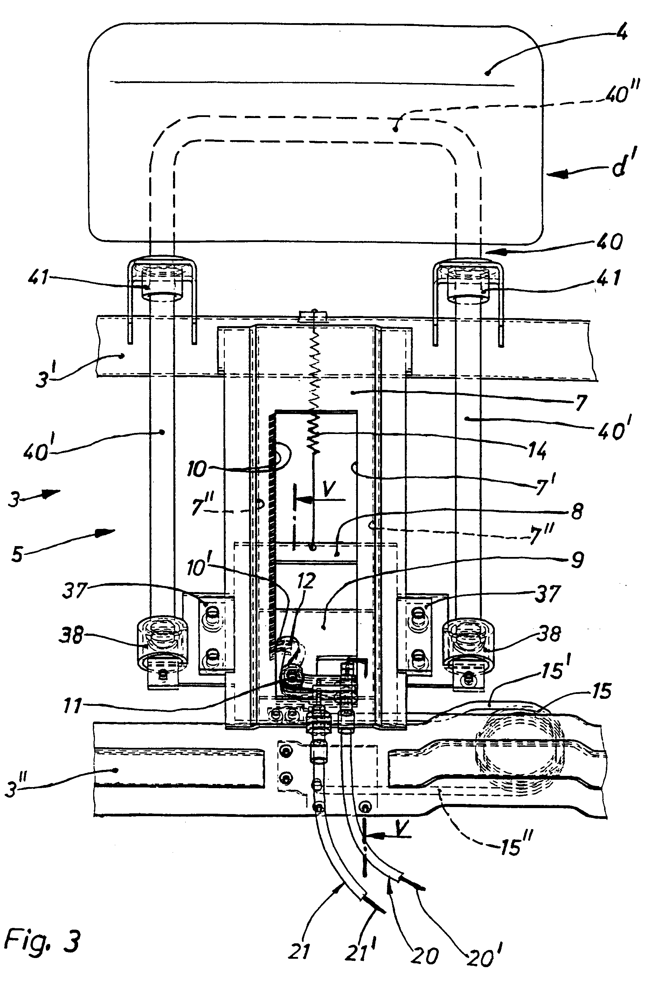

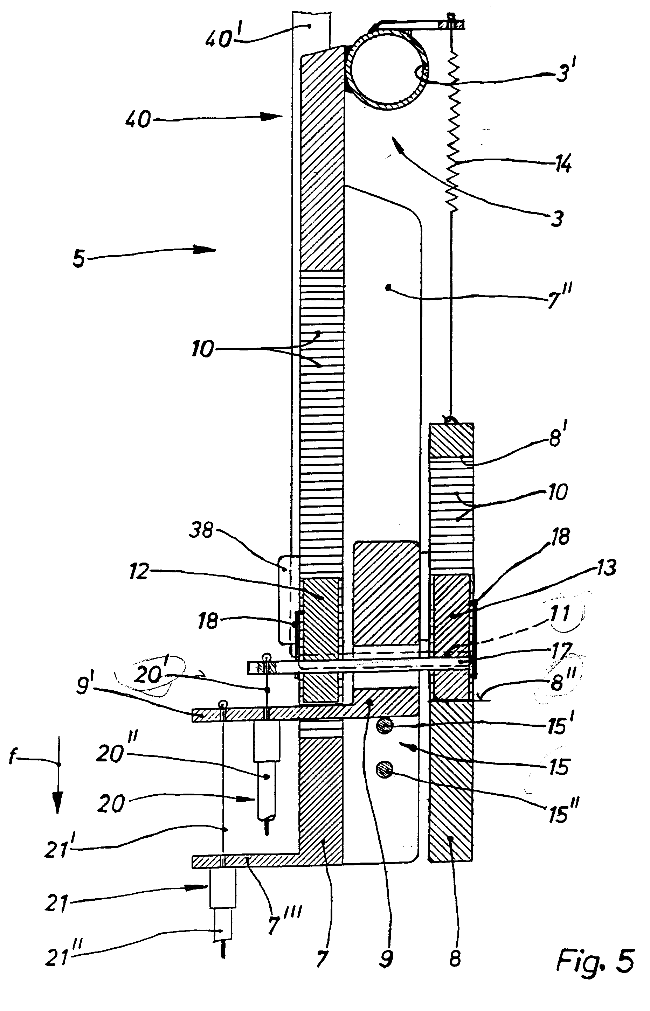

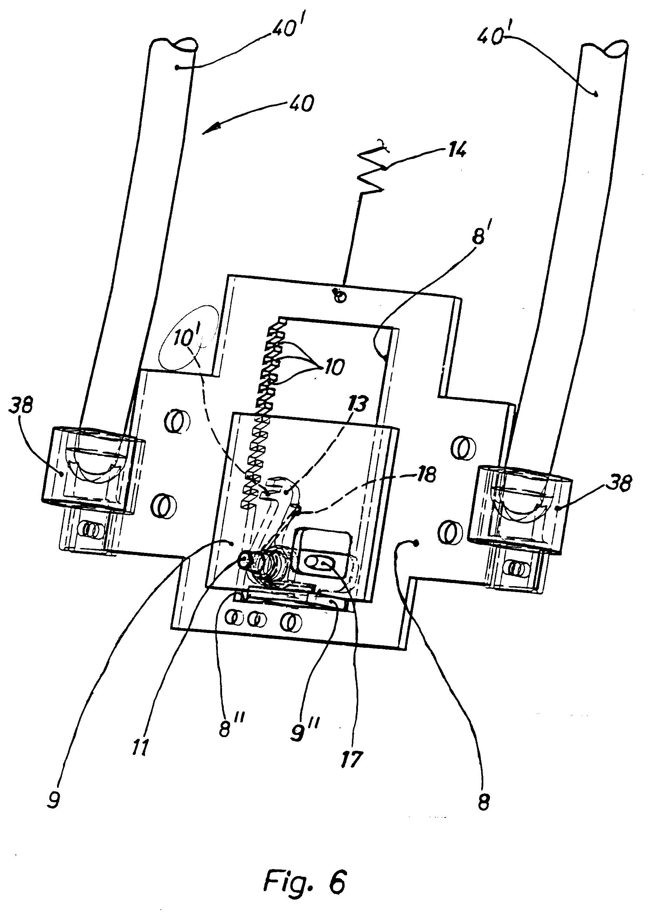

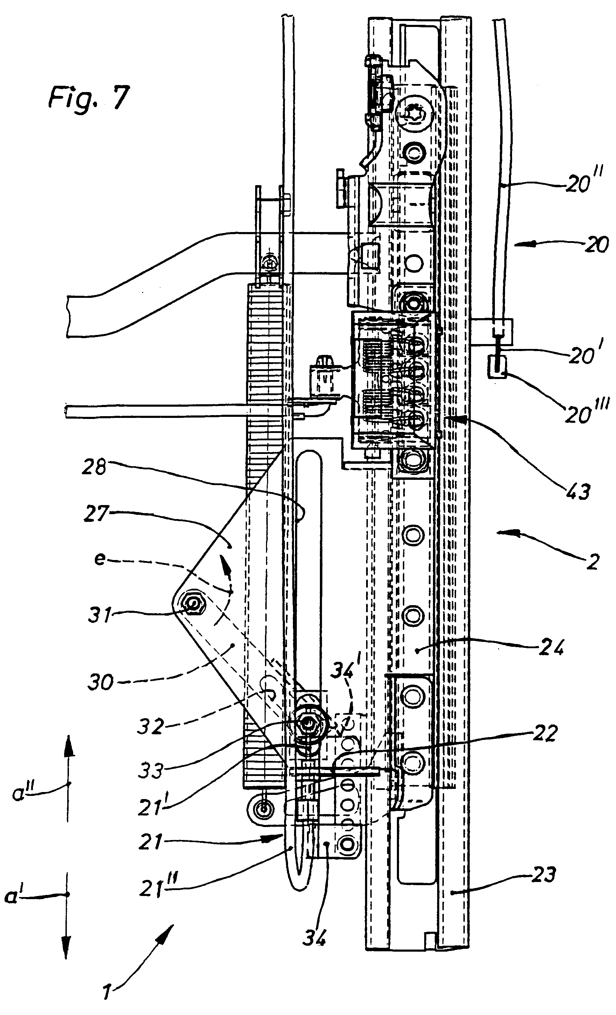

Die zum Verlagern der Kopfstütze 4 in den Richtungen des Doppelpfeils b dienende Höhenverstelleinrichtung 5 besteht - wie die Figuren 2 bis 6 zeigen - aus einem am Rahmenquerteil 3' der Rückenlehne 3 wie dargestellt starr oder auch schwenkbar angebrachten Aufnahmeteil 7, einem an diesem höhenverschiebbar geführten Gleitteil 8 und einem zwischen diesem und dem Aufnahmeteil 7 liegenden, höhenverschiebbaren Führungsteil 9 (Figur 5). Dabei hat das Aufnahmeteil 7 und das Gleitteil 8 jeweils eine mittige, rechteckförmige Ausnehmung 7' und 8'. An zwei nebeneinander liegenden Längsseiten der rechteckförmigen Ausnehmung 7' und 8' des Aufnahmeteils 7 und des Gleitteils 8 ist jeweils eine Rastverzahnung 10 ausgebildet, die jeweils eine gleich große und gleichgerichtete Zahnteilung haben. Dabei schließen die einzelnen Zähne der Rastverzahnung 10 einen spitzen Winkel mit dem Randabschnitt 8'' des Gleitteils 8 ein (Figur 3, 4 und 6). Ferner weist das Führungsteil 9 eine drehfest eingesetzte Lagerwelle 11 auf, an deren beiden, jeweils über das Führungsteil 9 hinausragenden Endabschnitten eine erste und eine zweite Rastklinke 12 und 13 schwenkbar gelagert sind (Figur 5). An der dem Rahmenquerteil 3' zugewandten Innenseite des Aufnahmeteils 7 ist beidseits der rechteckförmigen Ausnehmung 7' jeweils eine längsverlaufende Führungsleiste 7'' vorgesehen (Figur 5), längs deren einander zugewandten Gleitbahnen das Führungsteil 9 an seinen Seitenwangen höhenverschiebbar geführt ist. Die an dessen Lagerwelle 11 schwenkbar gelagerte zweite Rastklinke 13 ist - wie die Figuren 5 und 6 zeigen - in der rechteckförmigen Ausnehmung 8' des Gleitteils 8 angeordnet, wobei der untenliegende Randabschnitt 8'' der rechteckförmigen Ausnehmung 8' durch die Wirkung einer an der Oberseite des Gleitteils 8 und am Rahmenquerteil 3' der Rückenlehne 3 - oder auch am Führungsteil 9 - befestigten Zugfeder 14 gegen die zweite Rastklinke 13 gezogen wird. Darüber hinaus liegt an der Unterseite des Führungsteils 9 der Endabschnitt 15' einer Schenkelfeder 15 mit Vorspannung an, deren anderer Endabschnitt 15'' an einem Querteil 3'' der Rückenlehne 3 festgelegt ist. Durch die Wirkung der Schenkelfeder 15 wird somit das Führungsteil 9 - gleichermaßen wie das Gleitteil 8 durch die Wirkung der Zugfeder 14 - zum Rahmenquerteil 3' der Rückenlehne 3 hin verlagert. An dem etwa lotrecht nach oben abstehenden Endabschnitt der winkelförmigen Rastklinken 12 und 13 ist jeweils eine mit der Rastverzahnung 10 des Aufnahmeteils 7 und des Gleitteils 8 in Eingriff bringbare Zahnung 10' ausgebildet, während die beiden, etwa waagrecht verlaufenden Winkelabschnitte der Rastklinken 12 und 13 durch ein Querteil 17 schwenkfest miteinander verbunden sind (Figuren 5 und 6). Gleichermaßen können die Rasklinken 12 und 13 auch an ihrem lotrechten Winkelabschnitt schwenkfest miteinander verbunden werden. Schließlich werden die Rastklinken 12 und 13 durch die Wirkung jeweils einer ihren lotrechten Endabschnitt beaufschlagenden und dabei die Lagerwelle 11 umgebenden sowie mit ihrem anderen Endabschnitt mit Vorspannung auf einer Auflage 9'' des Führungsteils 9 aufliegenden Schenkelfeder 18 in Verrastlage gehalten, wobei die Zahnung 10' der Rastklinken 12 und 13 in die entsprechend ausgebildete Rastverzahnung 10 des Aufnahmeteils 7 und des Gleitteils 8 eingreift (Figuren 5 und 6). Am freien Endabschnitt des Querteils 17 ist schließlich das Drahtseil 20' eines zweiten Bowdenzugs 20 befestigt, dessen gegenüberliegender Endabschnitt sich am Sitzteil 2 befindet, von dem aus der zweite Bowdenzug 20 betätigt wird. Dabei ist dessen Hülle 20'' an einem vom Führungsteil 9 seitlich abstehenden Fortsatz 9' befestigt, wie Figur 5 zeigt. Wie in dieser Figur ferner ersichtlich, ist am freien Endabschnitt des Fortsatzes 9' des Führungsteils 9 das Drahtseil 21' eines ersten Bowdenzugs 21 festgelegt, dessen Hülle 21'' an einem vom Aufnahmeteil 7 abstehenden Halter 7''' angebracht ist. Schließlich ist der gegenüberliegende Endabschnitt der Hülle 21'' des ersten Bowdenzugs 21 an einem Halteteil 22 befestigt, das seinerseits an einer längsverschiebbaren Gleitschiene 24 angebracht ist (Figur 7).

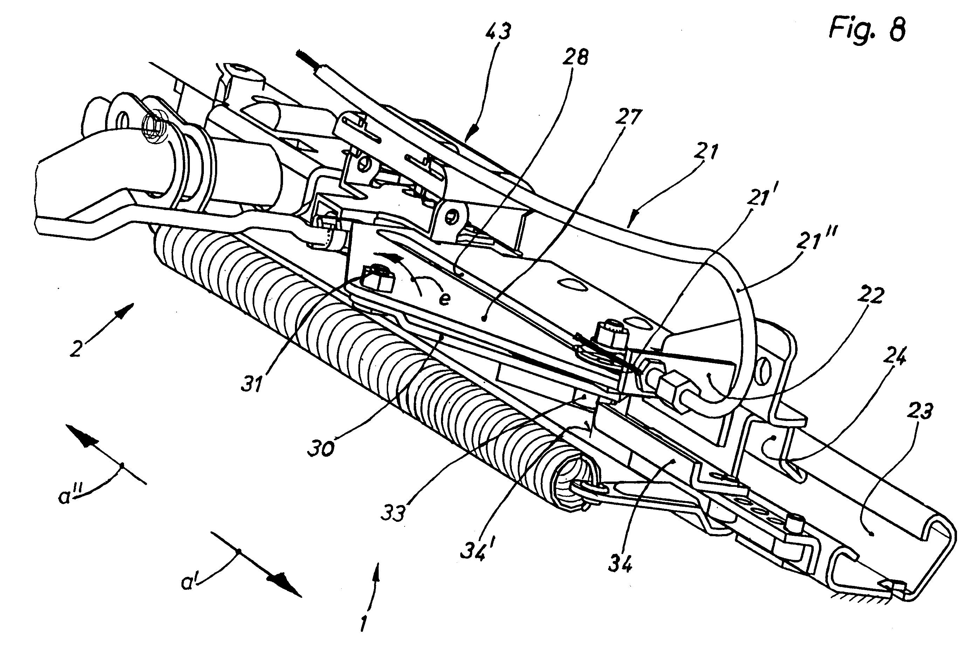

Auf den in den Figuren 2, 7 und 8 dargestellten, fahrzeugaufbaufesten Führungsschienen 23 ist jeweils eine den Fahrzeugsitz 1 tragende Gleitschiene 24 in Fahrzeuglängsrichtung (Doppelpfeil a) verschiebbar gelagert. Dabei ist auf der in Fahrtrichtung links liegenden Gleitschiene 24 eine Aufnahmeplatte 27 befestigt, welche einen sich längs der Gleitschiene 24 erstreckenden Längsschlitz 28 aufweist. Ferner ist an dem diesem gegenüberliegenden Randbereich der Aufnahmeplatte 27 sowie im Längsmittelbereich des Längsschlitzes 28 und in einem Abstand zu diesem ein Schwenkhebel 30 an einer Halteschraube 31 schwenkbar gelagert, wobei der Schwenkhebel 30 an seinem freien Endabschnit seinerseits einen Längsschlitz 32 aufweist. Der Längsschlitz 28 der Aufnahmeplatte 27 sowie der Längsschlitz 32 des Schwenkhebels 30 sind miteinander von einem Befestigungselement 33 durchsetzt, das in den Längsschlitzen 28 und 32 längsverschiebbar geführt ist. Ferner ist am Befestigungselement 33 das Drahtseil 21' des ersten Bowdenzugs 21 festgeklemmt. Schließlich ist an der fahrzeugaufbaufesten Führungsschiene 23 ein Anschlag 34 angebracht, dessen Stirnseite 34' beim Vorwärtsverlagern des Fahrzeugsitzes 1 in Pfeilrichtung a' mit dem Befestigungselement 33 zusammenwirkt, wie im folgenden erläutert wird.

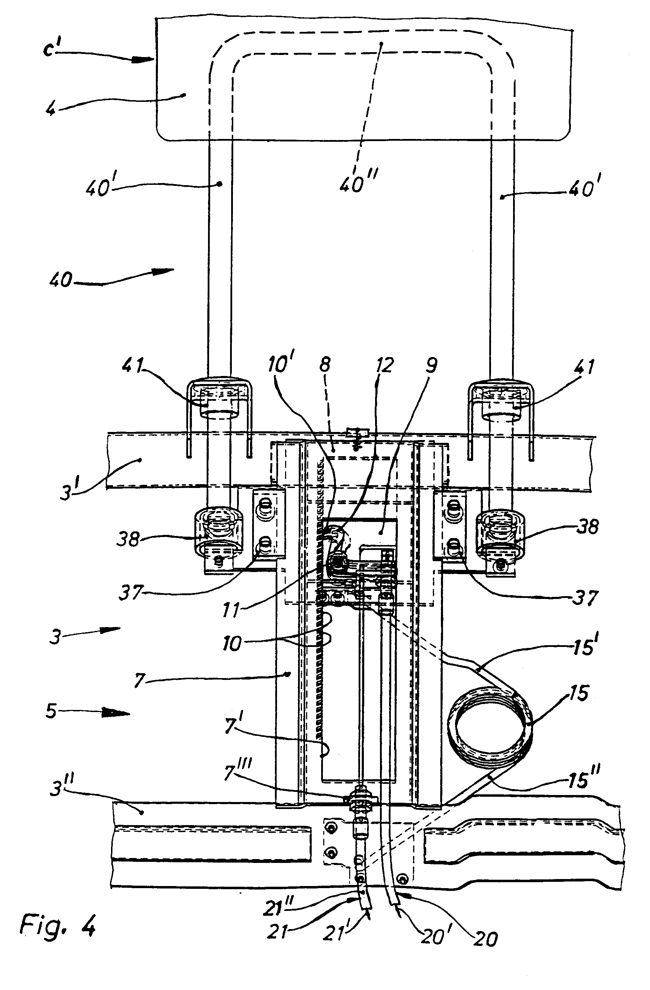

Wie die Figuren 3, 4 und 6 zeigen, ist das Gleitteil 8 breiter als das Aufnahmeteil 7 gestaltet und an seinen gegenüberliegenden Randbereichen jeweils mit einem leistenförmigen Gleitelement 37 versehen, über die das Gleitteil 8 längs den seitlichen Führungsbahnen des Aufnahmeteils 7 höhenverschiebbar geführt ist. (Figuren 3 und 4) Ferner ist am Gleitteil 8 benachbart der Gleitelemente 37 jeweils eine rohrförmige Halterung 38 vorgesehen, in denen die untenliegenden Endabschnitte 40' eines U-förmigen Bügels 40 durch Clipse befestigt sind. Am Steg 40'' des U-förmigen Bügels 40 ist die Kopfstütze 4 angebracht. Schließlich sind am Rahmenquerteil 3' der Rückenlehne 3 zwei Führungshülsen 41 vorgesehen, in denen die beiden Schenke 40' des U-förmigen Bügels 40 mit Radialspiel höhenverschiebbar gleiten.

Durch die Sitzverriegelung 43 ist die Längsverschiebbarkeit des Fahrzeugsitzes 1 in den Richtungen des Doppelpfeils a in bezug auf die fahrzeugaufbaufeste Führungsschiene 23 ver- und entriegelbar, wobei die Sitzverriegelung 43 über den Betätigungshebel 20''' betätigt wird.

Die Wirkungsweise der Höhenverlagerung der Kopfstütze 4 bei Längsverlagerungen des Fahrzeugsitzes 1 und der erfindungsgemäßen Höhenverstelleinrichtung 5 ist folgende (Figur 1 bis 8):
a) Zwangsgeführte Höhenverlagerung der Kopfstütze 4 in den Richtungen des Doppelpfeils b bei Längsverlagerungen des Fahrzeugsitzes 1 in den Richtungen des Doppelpfeils a:
   Für eine Verlagerung des sich in rückwärtsverlagerter Lage c befindenden Fahrzeugsitzes 1 in Pfeilrichtung a', also nach vorne, wird der Betätigungshebel 20''' des zweiten Bowdenzugs 20 betätigt und dabei dessen Drahtseil 20' am Sitzteil 2 aus der Hülle 20'' herausgezogen, wodurch über das Querteil 17 sowohl die Rastklinke 12 als auch die Rastklinke 13 gegen die Wirkung der Schenkelfedern 18 zurückgeschwenkt, also in bezug auf die Rastverzahnung 10 des Aufnahmeteils 7 und des Gleitteils 8 außer Eingriff gebracht werden. Ferner wird hierbei über den Betätigungshelbel 20''' auch die Sitzverriegelung 43 entriegelt, wodurch bei Verlagerung des Fahrzeugsitzes 1 durch den auf diesem sitzenden Fahrzeuginsassen in Pfeilrichtung a' das Befestigungselement 33 des Schwenkhebels 30 an der Stirnseite 34' des Anschlags 34 anliegt. Bei weiterem Verlagern des Fahrzeugsitzes 1 in Pfeilrichtung a' wird nunmehr der Schwenkhebel 30 in Pfeilrichtung e verschwenkt und dadurch das Drahtseil 21' des ersten Bowdenzugs 21 aus dessen Hülle 21'' herausgezogen. Hierdurch wird über den Fortsatz 9' das Führungsteil 9 in Pfeilrichtung f (Figur 5) gegen die Wirkung der Schenkelfeder 15 nach unten verlagert. Da die am Führungsteil 9 über die Lagerwelle 11 schwenkbar gelagerte Rastklinke 13 mit ihrer Unterkante auf dem untenliegenden Randabschnitt 8'' der rechteckförmigen Ausnehmung 8' des Gleitteils 8 aufliegt, wird gleichzeitig über das Führungsteil 9 auch das Gleitteil 8 in Pfeilrichtung f, also abwärts, verlagert. Nachdem am Gleitteil 8 über die Halterung 38 der U-förmige Bügel 40, welcher seinerseits die Kopfstütze 4 trägt, befestigt ist, wird auch diese abwärts (Pfeilrichtung b' in Figur 1) verlagert. In der jeweiligen Schiebestellung des Fahrzeugsitzes 1 wird dieser über den Betätigungshebel 20''' und über die Sitzverriegelung 43 mit der fahrzeugaufbaufesten Führungsschiene 23 verrastet. Schließlich rasten auch die Rastklinken 12 und 13 mit ihrer Zahnung 10' durch die Wirkung der sie beaufschlagenden Schenkelfedern 18 in die Rastverzahnung 10 des Aufnahmeteils 7 und des Gleitteils 8 ein, so daß die Kopfstütze 4 in der jeweiligen Schiebestellung des Fahrzeugsitzes 1 schubfest festgelegt ist.
   Beim Rückwärtsverlagern des Fahrzeugsitzes 1, also in Pfeilrichtung a'', wird über den Betätigungshebel 20''' die Sitzverriegelung 43 entriegelt und das Drahtseil 20' aus der Hülle 20'' des Bowdenzugs 20 herausgezogen, wobei die Rastklinken 12 und 13 über das am Querteil 17 angreifende Drahtseil 20' und gegen die Wirkung der Schenkelfedern 18 aus der Rastverzahnung 10 des Aufnahmeteils 7 und des Gleitteils 8 herausgeschwenkt werden. Sodann wird das Führungsteil 9 über den Endabschnitt 15' der sich nunmehr entspannenden Schenkelfeder 15 (Figur 4) und das Gleitteil 8 durch die Wirkung der vorgespannten Zugfeder 14 und damit die am Gleitteil 8 über den U-förmigen Bügel 40 angebrachte Kopfstütze 4 nach oben (Pfeilrichtung b'' in Figur 1) verlagert. Bei diesem Vorgang wird gleichzeitig der Schwenkhebel 30 aus seiner jeweiligen Schwenklage entgegen Pfeilrichtung e bis in den Bereich der in Figur 7 dargestellten Endlage verschwenkt und dadurch das Drahtseil 21' des Bowdenzugs 21 in dessen Hülle 21'' geschoben, wodurch es im Bereich der Hähenverstelleinrichtung 5 aus der Hülle 21'' geschoben wird. In Endlage der Kopfstütze 4 rasten schließlich die Rastklinken 12 und 13 mit ihrer Zahnung 10' durch die Wirkung der Schenkelfedern 18 in die Rastverzahnung 10 des Aufnahmeteils 7 und des Gleitteils 8 ein, wodurch die Kopfstütze 4 schließlich die hochgestellte, schubfeste Endlage c' (Figuren 1 und 4) einnimmt.
b) Manuelle Höhenverlagerung der Kopfstütze 4:
   Für eine gewünschte, beliebige Höhenlage der Kopfstütze 4 zwischen ihrer hochgestellten Lage c' und ihrer abgesenkten Lage d' (Figur 1) ohne gleichzeitige Längsverlagerung des Sitzteils 2 wird lediglich der Betätigungshebel 20''' des Bowdenzugs 20 betätigt, wodurch dessen Drahtseil 20' in Pfeilrichtung f verlagert und dadurch über das Querteil 17 die Rastklinken 12 und 13 mit ihrer Zahnung 10' gegen die Wirkung der Schenkelfedern 18 aus der Rastverzahnung 10 des Aufnahmeteils 7 und des Gleitteils 8 herausgeschwenkt werden. Nunmehr wird lediglich die Kopfstütze 4 manuell erfaßt und in Pfeilrichtung b' gegen die Wirkung der Zugfeder 14 in die vom Fahrzeuginsassen jeweils gewünschte Höhenlage verlagert. Dabei wird über die Kopfstütze 4 gleichzeitig auch der U-förmige Bügel 40 und über diesen das Gleitteil 8 nach unten verlagert. Nach Loslassen des Betätigungshebels 20''' greifen die Rastklinken 12 und 13 mit ihrer Zahnung 10' durch die Wirkung der Schenkelfedern 18 in die Rastverzahnung 10 des Aufnahmeteils 7 und des Gleitteils 8 ein, so daß schließlich die Kopfstütze 4 über das Gleitteil 8 in der jeweiligen Höhenlage schubfest festgelegt ist. Bei erneuter Betätigung des Betätigungshebels 20''' des Bowdenzugs 20 werden in erwähnter Weise über dessen Drahtseil 20' und Querteil das 17 die Rastklinken 12 und 13 von der Rastverzahnung 10 des Aufnahmeteils 7 und des Gleitteils 8 weggeschwenkt, so daß dieses und damit die Kopfstütze 4 durch die Wirkung der vorgespannten Zugfeder 14 wiederum in die in Figur 1 veranschaulichte, hochgestellte Lage c' zurückverlagert wird.

## Patentansprüche

1. Fahrzeugsitz mit einer Kopfstütze, die derart durch eine Verstelleinrichtung betätigt wird, daß sie beim Vorwärtsverlagern des Fahrzeugsitzes nach unten, bei dessen rückwärtsverlagern dagegen nach oben verlagert wird, gekennzeichnet durch eine Einrichtung (Aufnahmeteil 7, Führungsteil 9 und Gleitteil 8), durch die die Kopfstütze (4) bedarfsweise auch manuell höhenverstellt werden kann.

2. Fahrzeugsitz nach Anspruch 1, dadurch gekennzeichnet, daß die Einrichtung (5) zum manuellen Höhenverlagern der Kopfstütze (4) im wesentlichen aus folgenden Teilen besteht:
- einem an einem Rahmenquerteil (3') der Rückenlehne (3) angebrachten Aufnahmeteil (7),
- einem am Aufnahmeteil (7) höhenverschiebbar geführten Gleitteil (8), das die Kopfstütze (4) trägt,
- einem zwischen Gleitteil (8) und Aufnahmeteil (7) liegenden sowie an diesem höhenverschiebbaren Führungsteil (9),
wobei das Führungsteil (9) bei Längsverlagerungen (Richtungen des Doppelpfeils a) des Fahrzeugsitzes (1) zwangsweise verlagert wird und am Führungsteil ferner mit dem Aufnahmeteil (7) und mit dem Gleitteil (8) zusammenwirkende Arretierelemente (Rastklinken 12 und 13) vorgesehen sind, die miteinander zum willkürlichen Verlagern der Kopfstütze (4) betätigt werden.

3. Fahrzeugsitz nach Anspruch 2, dadurch gekennzeichnet, daß das Aufnahmeteil (7) und das Gleitteil (8) an zwei nebeneinander liegenden Längsseiten jeweils eine Rastverzahnung (10) mit jeweils gleich großer Zahnteilung aufweist, in die die Rastklinken (12 und 13) eingreifen.

4. Fahrzeugsitz nach Anspruch 2, dadurch gekennzeichnet, daß das Gleitteil (8) durch eine an diesem und am Rahmenquerteil (3') der Rückenlehne (3) befestigte Zugfeder (14) in Ruhelage gehalten wird, während gegen das Führungsteil (9) eine Schenkelfeder (15) wirkt, die sich ihrerseits an einem Querteil (3'') der Rückenlehne abstützt, wobei das Führungsteil gleichgerichtet wie das Gleitteil durch Federwirkung verlagert wird.

5. Fahrzeugsitz nach Anspruch 2, dadurch gekennzeichnet, daß Führungsteil (9) von einer Lagerwelle (11) durchsetzt ist, an deren beiden, über das Führungsteil hinausragenden Endabschnitten jeweils eine winkelförmige Rastklinke (12 und 13) schwenkbar gelagert ist, an deren freien, miteinander verbundenen Endabschnitten das Drahtseil (20') eines zweiten, am Sitzteil (2) des Fahrzeugsitzes (1) festgelegten Bowdenzugs (20) angreift, dessen Hülle (20'') an einem vom Führungsteil abstehenden Fortsatz (9') befestigt ist.

6. Fahrzeugsitz nach Anspruch 5, dadurch gekennzeichnet, daß das Gleitteil (8) eine mittige, rechteckförmige Ausnehmung (8') aufweist, in der sich die zweite Rastklinke (13) befindet, die mit dem untenliegenden Randabschnitt (8'') der rechteckförmigen Ausnehmung zusammenwirkt.

7. Fahrzeugsitz nach Anspruch 2, dadurch gekennzeichnet, daß das Gleitteil (8) über zwei seitlich abstehende Gleitelemente (37) längs den seitlichen Führungsbahnen des Aufnahmeteiles (7) höhenverschiebbar geführt ist, wobei sich an die Gleitelemente jeweils eine rohrförmige Halterung (38) für die Schenke (40') eines U-förmigen Bügels (40) anschließt, der an seinem Steg (40'') die Kopfstütze (4) trägt.

8. Fahrzeugsitz nach Anspruch 5, dadurch gekennzeichnet, daß am Fortsatz (9') des Führungsteils (9) das Drahtseil (21') eines ersten Bowdenzugs (21) angreift, dessen Hülle (21'') an einem Halter (7''') des Aufnahmeteils (7) angebracht ist, wobei der gegenüberliegende Endabschnitt der Hülle an einem Halteteil (22) einer längsverschiebbaren Gleitschiene (24) befestigt ist.

9. Fahrzeugsitz nach Anspruch 8, dadurch gekennzeichnet, daß
- an der ihrerseits auf einer fahrzeugaufbaufesten Führungsschiene (23) längsverschiebbaren Gleittschiene (24) eine Aufnahmeplatte (27) mit einem sich etwa längs der Gleitschiene erstreckenden Längsschlitz (28) angebracht ist,
- an der Aufnahmeplatte (27) in einem Abstand zum Längsschlitz (28) und in dessen Längsmittelbereich ein seinerseits an seinem freien Endabschnitt mit einem Längsschlitz (32) versehener Schwenkhebel (30) angelenkt ist,
- der Längsschlitz (32) des Schwenkhebels (30) und der Längsschlitz (28) der Aufnahmeplatte (27) miteinander von einem in den beiden Teilen längsverschiebbaren Befestigungselement (33) durchsetzt sind, an dem das Drahtseil (21') des ersten Bowdenzugs (21) befestigt ist.

10. Fahrzeugsitz nach Anspruch 9, gekennzeichnet durch einen an der fahrzeugaufbaufesten Führungsschiene (23) angebrachten Anschlag (34), mit dem das Befestigungselement (33) beim Vorwärtsverlagern (Pfeilrichtung a') des Fahrzeugsitzes (1) derart zusammenwirkt, daß die Kopfstütze (4) in die abgesenkte Lage (d') verlagert wird.
